(19) Europäisches Patentamt
European Patent Office
Office européen des brevets

(11) **EP 3 591 928 B1**

(12) **EUROPEAN PATENT SPECIFICATION**

(45) Date of publication and mention
of the grant of the patent:
**01.09.2021 Bulletin 2021/35**

(51) Int Cl.:
*H04L 29/06* *(2006.01)*      *H04L 29/08* *(2006.01)*

(21) Application number: **18181969.9**

(22) Date of filing: **05.07.2018**

(54) **METHOD FOR IMPROVED COMMUNICATION BETWEEN A SOFTWARE CLIENT APPLICATION - BEING LOADED TO OR INSTALLED ON A CLIENT COMPUTING DEVICE - AND AN APPLICATION NETWORK BACKEND, CLIENT COMPUTING DEVICE AND SYSTEM FOR IMPROVED COMMUNICATION BETWEEN A SOFTWARE CLIENT APPLICATION AND AN APPLICATION NETWORK BACKEND, PROGRAM AND COMPUTER-READABLE MEDIUM**

VERFAHREN ZUR VERBESSERTEN KOMMUNIKATION ZWISCHEN EINER AUF EINER CLIENT-COMPUTERVORRICHTUNG GELADENEN ODER INSTALLIERTEN SOFTWARE-CLIENT-ANWENDUNG UND EINEM ANWENDUNGSNETZWERK-BACKEND, CLIENT-COMPUTERVORRICHTUNG UND SYSTEM ZUR VERBESSERTEN KOMMUNIKATION ZWISCHEN EINER SOFTWARE-CLIENT-ANWENDUNG UND EINEM ANWENDUNGSNETZWERK-BACKEND, PROGRAMM UND COMPUTERLESBARES MEDIUM

PROCÉDÉ DE COMMUNICATION AMÉLIORÉE ENTRE UNE APPLICATION LOGICIELLE CLIENT - ÉTANT CHARGÉE OU INSTALLÉE SUR UN DISPOSITIF INFORMATIQUE CLIENT - ET UN ARRIÈRE-PLAN DE RÉSEAU D'APPLICATION, DISPOSITIF DE CALCUL CLIENT ET SYSTÈME DE COMMUNICATION AMÉLIORÉE ENTRE UNE APPLICATION LOGICIELLE CLIENT ET UN ARRIÈRE-PLAN DE RÉSEAU D'APPLICATION, PROGRAMME ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2020 Bulletin 2020/02**

(73) Proprietor: **Deutsche Telekom AG**
**53113 Bonn (DE)**

(72) Inventor: **MELANDER, Mari**
**53225 Bonn (DE)**

(74) Representative: **Schwöbel, Thilo K. et al**
**Kutzenberger Wolff & Partner**
**Waidmarkt 11**
**50676 Köln (DE)**

(56) References cited:
**US-A1- 2011 231 562      US-A1- 2014 012 997**

**Description**

BACKGROUND

The present invention relates to a method for improved communication between a software client application - being loaded to or installed on a client computing device - and an application network backend, using a telecommunications network, wherein the client computing device receives a plurality of communication messages using an established or common messaging service within the telecommunications network.

Prior art document US20110231562 A1 refers to the re-establishment when or after deterioration of a connectivity or loss of reachability between a client and a server has been detected, followed by a complete process for establishing a communication session and a registration process.

Additionally, the present invention relates to a client computing device for improved communication between a software client application - being loaded to or installed on the client computing device - and an application network backend, using a telecommunications network, wherein the client computing device receives a plurality of communication messages using an established or common messaging service within the telecommunications network.

Additionally, the present invention relates to a system for improved communication between a software client application - being loaded to or installed on a client computing device - and an application network backend, using a telecommunications network, the system comprising the telecommunications network, the application network backend, and the client computing device with the software client application, wherein the client computing device receives a plurality of communication messages using an established or common messaging service within the telecommunications network.

Furthermore, the present invention relates to a program and to a computer-readable medium for improved communication between a software client application and an application network backend.

The present invention generally relates to a software client application being loaded to or installed on a client computing device that receives information or data or messages from an application network backend, using the telecommunications network, the client computing device (or user equipment) is or can be attached or connected to.

Today many businesses and services offer applications (or software client applications) that can be loaded to or installed in (or on) client computing devices such as smartphones, tablets and other devices. The applications (or software client applications) can communicate with the respective backends (or application network backend) by using the existing messaging services which offer Application Programming Interfaces (APIs), e.g. the Android operating system offers an API for Short Message Service (SMS). However, the backend (or application network backend) is typically not able to send messages directly to the application; it can send messages, but they are typically received in the regular inbox, not specifically in the application (or software client application), e.g. an airline can send a boarding card in email or in SMS.

SUMMARY

An object of the present invention is to provide an effective and simple solution to realize an improved communication between a software client application - being loaded to or installed on a client computing device - and an application network backend, using a telecommunications network.

The object of the present invention is achieved by a method for improved communication between a software client application - being loaded to or installed on a client computing device - and an application network backend, using a telecommunications network,
wherein the client computing device receives a plurality of communication messages using an established or common messaging service within the telecommunications network and wherein the software client application and the client computing device are configured such that specific communication messages, being sent by the application network backend to the client computing device, are selectively provided to the software client application or selectively handled by the software client application,

wherein the method comprises the following steps:

-- in a first step, a reachability identifier information is defined or generated,
-- in a second step, subsequent to the first step, a specific communication message, transmitted by the telecommunications network according to the established or common messaging service and initiated by the application network backend, is received by the client computing device, the specific communication message comprising the reachability identifier information,
-- in a third step, subsequent to the second step, the reachability identifier information of the specific communication message is detected and the specific communication message selectively provided to the software client application or selectively handled by the software client application.

It is thereby advantageously possible according to the present invention to provide for a direct but asynchronous communication between the application network backend and the software client application on the client computing device.

According to conventionally known messaging, any service can typically implement a direct connection between the service application and the service backend using APIs for data connection, which typically are available in the operating systems of the client computing device. However, every application needs to implement its own messaging system and it is dependent on the availability of the data connectivity. Also, to allow the service backend to send asynchronous messages towards the application, the connection either needs to be open all the time or it needs to be regularly polled, which would likely drain the device battery. According to the present invention, an easy framework is provided for such services to use by means of implementing direct messaging between the respective application network backend, and the corresponding applications.

According to the present invention, the messages - between the application network backend and the software client application on the client computing device - by means of which this direct but asynchronous communication is realized are essentially messages according to (or using) an established or common messaging service within the telecommunications network, such as, e.g., SMS, MMS, email or other common messaging services. Typically, the client computing device receives a plurality of such communication messages (using this established or common messaging service), i.e. the messages (according to this established or common messaging service) sent from the application network backend to the software client application on the client computing device are only a subset of all such communication messages using the established or common messaging service in question. The communication messages of this subset of all such communication messages are hereinafter also called specific communication messages.

According to the present invention, these specific communication messages (i.e. being sent by the application network backend to the client computing device) are selectively provided to the software client application or selectively handled by the software client application.

According to the present invention, a reachability identifier information is to be defined or generated (in order to be able to identify (or differentiate) the specific communication messages from the residual communication messages according to the established or common messaging service in question that is used for the specific communication messages). This reachability identifier information needs, of course, to be known to a messaging handling part (or software module) of the client computing device, such that, upon receipt (by the client computing device) of such a specific communication message (transmitted by the telecommunications network according to the established or common messaging service and initiated by the application network backend, the specific communication message comprising, of course, the reachability identifier information), the specific communication message can be selectively provided to the software client application (e.g. by an operation system or general messaging handling component of the client computing device) or selectively handled by the software client application upon detection of the reachability identifier information (of the specific communication message).

Hence, according to the present invention, it is advantageously possible that (software client) applications receive (specific communication) messages directly in the (software client) application. According to one alternative embodiment according to the present invention, a reachability identification manager is used, which is typically installed on or in the device (i.e. the client computing device) or is part of the operating system of the device. According to this considered embodiment according to the present invention, it is possible that each software client application register its (specific or different) reachability identifier towards the reachability identification manager. The service backend (i.e. the application network backend) knows, of course, the reachability identifier (or reachability identifier information) of its service application (or software client application) and it adds the reachability identifier information into the message it sends to the client computing device (and, hence, to its corresponding software client application). According to this considered embodiment according to the present invention, the reachability identification manager receives all messages, and it delivers them to the respective (software client) applications according to the reachability identifiers (or reachability identifier information); in other words, a message is sent to the correct device as usually, based on the addressing of the underlying messaging service (i.e. for example the MSISDN/phone number for SMS), and furthermore, the message is delivered to the correct application according to the reachability identifier (information). Apart from the reachability identifier (information), the residual message content (and how the (software client) application handles this content, is up to the service to define. Hence, according to the present invention, services (application network backends providing services in connection with corresponding software client applications) are provided with an asynchronous way to communicate with their applications.

According to the present invention, it is preferred that the client computing device comprises a reachability identification manager, wherein the reachability identification manager reads the plurality of communication messages received by the client computing device, and furthermore detects the reachability identifier information of the specific communication message and provides the specific communication message selectively to the software client application.

Furthermore according to the present invention, it is preferred that, prior to the second step, the software client application registers the reachability identifier information with the reachability identification manager.

By means of using a reachability identification manager and/or by means of registering the reachability identifier information with the reachability identification manager, it is advantageously possible according to the present invention that, by means of using the reachability identification manager within the client computing device, the reachability identifier information of or within a specific communication message is detected and the specific communication message in question be sent or delivered or provided to the correct software client application within the client computing device.

In order to prevent a situation where different services (or different combinations of application network backends and corresponding software client applications) accidently choose the same reachability identifier information (with the possibility of causing confusion if the corresponding software client applications are installed on the client computing device (typically a phone)), a reachability identification backend, which assigns the reachability identifier to the application and against which the reachability identification manager can verify the used reachability identifier is provided according to the present invention. Hence, it is preferred according to the present invention that, besides the software client application on the client computing device and the application network backend, the telecommunications network comprises or is able to access a reachability identification backend entity, wherein prior to or during the first step, the reachability identifier information is generated or defined by the reachability identification backend entity.

By means of using a reachability identification backend, it is advantageously possible to avoid such situations of using the same reachability identifier information, and hence to avoid such situations of confusion even though a plurality of software client applications are installed on the client computing device.

Furthermore according to the present invention, it is preferred that - prior to the second step and as part of the registration of the reachability identifier information with the reachability identification manager - the validity of the reachability identifier information is verified by the reachability identification manager, and - in case of this verification being successfully performed - confirmed to the software client application, the verification being especially performed by the reachability identification manager by an exchange of messages with the reachability identification backend entity, especially a verification request message towards the reachability identification backend entity and a verification confirmation message from the reachability identification backend entity.

Thereby, it is advantageously possible to verify the reachability identifier information (provided by the software client application to the reachability identification manager) by the reachability identification backend entity.

According to a further preferred embodiment of the present invention, the reachability identifier information

-- identifies the software client application and/or the application network backend, or
-- corresponds to both a backend address, especially referring to the application network backend, and information identifying the software client application and/or the application network backend, or
-- corresponds at least to information identifying the client computing device and at least one out of the software client application and the application network backend, wherein the reachability identifier information either comprises the mentioned items in encrypted form or corresponds to the mentioned items in unencrypted form.

Thereby, it is advantageously possible to use the reachability identifier information comparatively easily and in a flexible manner.

According to the present invention it is furthermore preferred that

-- the specific communication message comprises the reachability identifier information as part of its content, and wherein especially the established or common messaging service within the telecommunications network - used to transmit the specific communication message - corresponds to the short message service (SMS) or to the IP multimedia subsystem based SMS, or wherein
-- the reachability identifier information is a property of the specific communication message, especially part of the header or part of an element of the header of the specific communication message, wherein especially the established or common messaging service within the telecommunications network - used to transmit the specific communication message - corresponds to the short message service (SMS).

Hence according to the present invention, there are basically two main options to include the reachability identifier information into a specific communication message: Either the reachability identifier information is made a part of the content of the message (i.e. the payload of the message), or the reachability identifier information is made part of a specific communication message by means of the reachability identifier information being transmitted as part of a property of the specific communication message. Of course, it is also possible according to the present invention to use both methods, i.e. define a property of the specific communication message that indicates either the complete reachability identifier information or part of it, and nevertheless include part of the reachability identifier information as a part of the content of the specific communication message. According to the present invention, in case the specific communication message comprises the reachability identifier information as part of its content, the short message service (SMS) or to the IP multimedia subsystem based SMS can be (or is to be) used as the established or common messaging service within the telecommunications network (i.e. the one established or common messaging service used to transmit the specific communication message). According to the present invention, in case the reachability identifier information is a property of the specific communication message, the short message service (SMS) is preferably be (or is to be) used as the established or common messaging service within the telecommunications network.

Hence, according to the present invention, a message (i.e. a specific communication message) is sent to the correct device as usually (according to the established or common messaging service used to transmit the specific communication message within the telecommunications network), based on the addressing of the underlying messaging service (i.e. for example the MSISDN/phone number for SMS), and furthermore, the specific communication message is delivered to the correct application according to the reachability identifier (information) that is included in the message content (i.e. in the payload of the message) - especially and preferably in case of using standard short message service (SMS) or in case of using IP multimedia subsystem SMS-, or the reachability identifier information is transmitted as a property of the specific communication message - especially and preferably in case of using standard short message service (SMS).

Furthermore, the present invention relates to a telecommunications network for improved communication between a software client application - being loaded to or installed on a client computing device - and an application network backend, using both the telecommunications network,
wherein the client computing device receives a plurality of communication messages using an established or common messaging service within the telecommunications network and wherein the software client application and the client computing device are configured such that specific communication messages, being sent by the application network backend to the client computing device, are selectively provided to the software client application or selectively handled by the software client application,
wherein the telecommunications network is configured such that:

-- a reachability identifier information is defined or generated,
-- a specific communication message, transmitted by the telecommunications network according to the established or common messaging service and initiated by the application network backend, is received by the client computing device, the specific communication message comprising the reachability identifier information,
-- the reachability identifier information of the specific communication message is detected and the specific communication message selectively provided to the software client application or selectively handled by the software client application.

Thereby, it is advantageously possible to provide a telecommunications network such that it is possible to provide for a direct but asynchronous communication between the application network backend and the software client application on the client computing device.

Furthermore, the present invention relates to a client computing device for improved communication between a software client application - being loaded to or installed on the client computing device - and an application network backend, using a telecommunications network,
wherein the client computing device receives a plurality of communication messages using an established or common messaging service within the telecommunications network and wherein the software client application and the client computing device are configured such that specific communication messages, being sent by the application network backend to the client computing device, are selectively provided to the software client application or selectively handled by the software client application,
wherein the client computing device is configured such that:

-- a reachability identifier information is defined or generated,
-- a specific communication message, transmitted by the telecommunications network according to the established or common messaging service and initiated by the application network backend, is received by the client computing device, the specific communication message comprising the reachability identifier information,
-- the reachability identifier information of the specific communication message is detected and the specific communication message selectively provided to the software client application or selectively handled by the software client application.

Thereby, it is advantageously possible to provide a client computing device such that it is possible to provide for a direct but asynchronous communication between the application network backend and the software client application on the client computing device.

Furthermore, the present invention relates to a system for improved communication between a software client application - being loaded to or installed on a client computing device - and an application network backend, using a telecommunications network, the system comprising the telecommunications network, the application network backend, and the client computing device with the software client application,

wherein the client computing device receives a plurality of communication messages using an established or common messaging service within the telecommunications network and wherein the software client application and the client computing device are configured such that specific communication messages, being sent by the application network backend to the client computing device, are selectively provided to the software client application or selectively handled by the software client application,

wherein the system is configured such that:

-- a reachability identifier information is defined or generated,

-- a specific communication message, transmitted by the telecommunications network according to the established or common messaging service and initiated by the application network backend, is received by the client computing device, the specific communication message comprising the reachability identifier information,

-- the reachability identifier information of the specific communication message is detected and the specific communication message selectively provided to the software client application or selectively handled by the software client application.

Thereby, it is advantageously possible to provide a system such that it is possible to provide for a direct but asynchronous communication between the application network backend and the software client application on the client computing device.

Additionally, the present invention relates to a computer-readable medium and to a program comprising a computer readable program code which, when executed on a computer or on a client computing device or on a network node of a telecommunications network or on a reachability identification backend entity, or in part on the client computing device and/or in part on the network node of the telecommunications network and/or in part on the reachability identification backend entity, causes the computer or the client computing device or the network node of the telecommunications network or the reachability identification backend entity to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

BRIEF DESCRIPTION OF THE DRAWINGS

**Figure 1** schematically illustrates a system, a telecommunications network, and a client computing device, the client computing device comprising a software client application, according to the present invention.

**Figure** 2 schematically illustrates a system, a telecommunications network, and a client computing device, the client computing device comprising a software client application, and the telecommunications network comprising a reachability identification backend entity, according to the present invention.

DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

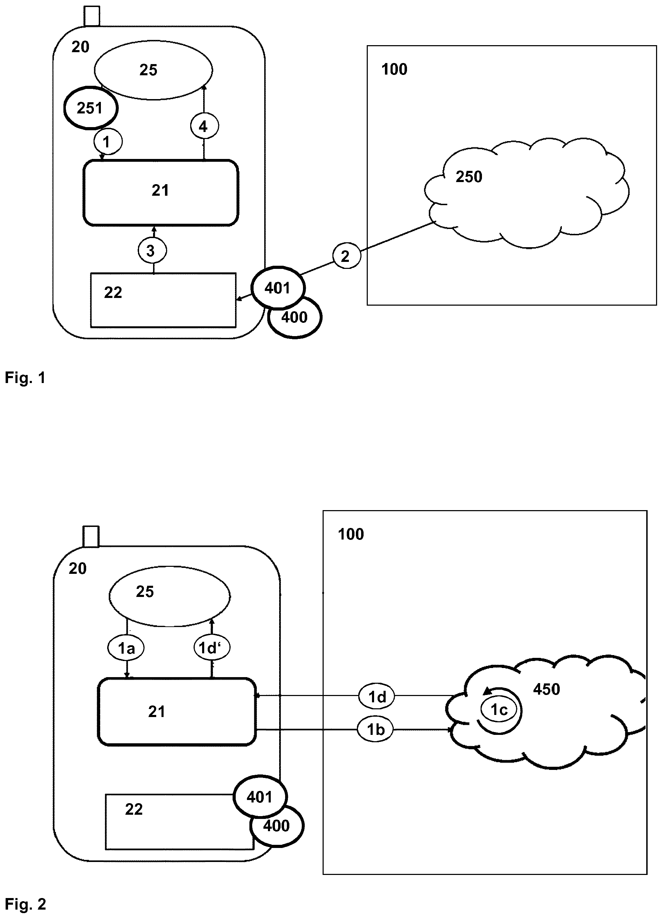

In Figure 1, a communication network 100 (or telecommunications network 100), and client computing device 20 is schematically shown. The telecommunications network 100 comprises an application network backend 250. The client computing device 20 - typically a phone or a smart phone or a tablet device or a mobile computing device or another computing device - comprises, besides a messaging handling module 22, a software client application 25 as well as a reachability identification manager 21.

According to the present invention, the client computing device 20 receives a plurality of communication messages 400, 401 using an established or common messaging service within the telecommunications network 100. The software client application 25 and the client computing device 20 are configured such that specific communication messages 401, being sent by the application network backend 250 to the client computing device 20, are selectively provided to the software client application 25 or selectively handled by the software client application 25. A prerequisite according to the present invention is that a reachability identifier information 251 is defined or generated (especially by the application network backend 250).

In case that a specific communication message 401, transmitted by the telecommunications network 100 according to the established or common messaging service and initiated by the application network backend 250, is received by the client computing device 20, the specific communication message 401 - comprising the reachability identifier information 251 - is able to be handled differently from other communication messages 400 (that do not comprise the reachability identifier information). This is done by means of detecting the reachability identifier information 251 of the specific communication message 401 and selectively providing the specific communication message 401 to the software client application 25 or selectively handling the specific communication message 401 by the software client application 25.

Typically, the reachability identification manager 21 is a software component that can be downloaded, pre-installed or integrated in a smartphone, tablet or other device. The service application (or software client application 25) belongs to a service, that has decided on a certain tag information, or reachability identifier information 251. The service application (i.e. the software client application 25) registers its reachability identifier information 251 towards the reachability identification manager 21 using an application programming interface (API) it offers (processing step 1, represented by reference sign "1" in Figure 1). This registration is typically a device internal interaction, that does not require internet connectivity or messaging service. There can be one reachability manager 21 in a device (or client computing device 20) which is able to serve all the applications (software client applications 25) that make use of the reachability identifier (one software client application 25 can, however, register several pieces of reachability identifier information 251 towards the reachability identification manager 21); however, it is also possible according to the present invention that a plurality of reachability manager functionalities are present in the client computing device 20. When the service backend (i.e. the application network backend 250) needs to send a message towards the service application (i.e. to the software client application 25 in the considered client computing device 20), it includes the reachability identifier information 251 in the message and sends it to the client computing device 20 using the addressing of the messaging system, e.g. MSISDN/ phone number for SMS (processing step 2, represented by reference sign "2" in Figure 1). The reachability identification manager 21 in the client computing device 20 receives all messages arriving to the user (processing step 3, represented by reference sign "3" in Figure 1) and compares the reachability identifier information 251 of an incoming message to the ones registered by the software client applications 25 and delivers the specific message to the correct application (processing step 4, represented by reference sign "4" in Figure 1), again using the API. When the service application (software client application 25) is closed or uninstalled, the reachability identification manager 21 unregisters the reachability identifier information 251 and after this the messages potentially received with this reachability identifier information 251 could be either deleted or sent to the usual messaging inbox.

In Figure 1, an alternative variant of the present invention is schematically shown where the reachability identification manager 21 (or a reachability identification manager functionality) is distinct or separated from the software client application 25. Especially, the software client application 25 is not involved in handling communication messages 400, 401 received by the client computing device 20 and handled by the messaging handling module 22 and the reachability identification manager 21 (or the reachability identification manager functionality). Hence, the specific communication messages 401 (being sent by the application network backend 250 to the client computing device 20) are selectively provided to the software client application 25, and the specific communication message 401 is selectively provided to the software client application 25.

According to a further alternative variant of the present invention (not depicted in Figure 1), the reachability identification manager 21 or reachability identification manager functionality is integrated in or linked to the software client application 25 such that the specific communication messages 401, being sent by the application network backend 250 to the client computing device 20, are selectively handled by the (reachability identification manager functionality of the) software client application 25, and such that the specific communication message 401 is selectively handled by the (reachability identification manager functionality of the) software client application 25.

In Figure 2, a still further variant of the present invention is schematically shown: Figure 2 represents a system, a telecommunications network 100, and a client computing device 20, the client computing device 20 comprising a software client application 25, and the telecommunications network 100 comprising a reachability identification backend entity 450. Of course, the telecommunications network 100 also comprises the application network backend 250 (or at least a functionality of an application network backend 250), however, the application network backend 250 is not represented in Figure 2. Also in the variant represented in Figure 2, the client computing device 20 - again typically a phone or a smart phone or a tablet device or a mobile computing device or another computing device - comprises, besides the messaging handling module 22, the software client application 25 as well as the reachability identification manager 21. Again, the client computing device 20 receives a plurality of communication messages 400, 401 using an established or common messaging service within the telecommunications network 100. The software client application 25 and the client computing device 20 are configured such that specific communication messages 401, being sent by the application network backend 250 to the client computing device 20, are selectively provided to the software client application 25 or selectively handled by the software client application 25. Again, it is a prerequisite that the reachability identifier information 251 is defined or generated. However and in contrast to the variant of the invention shown in Figure 1, in order to prevent a situation where one and the same reachability identifier information 251 is assigned to different services (or different combinations of application network backends and corresponding software client applications), the reachability identification backend entity 450 is provided which assigns the reachability identifier information to each application (or even a plurality of different pieces of reachability identifier information to an application). Especially, it is possible that the reachability identification manager 21 is able to verify a used reachability identifier information 251 against the reachability identification backend entity 450. Hence, the telecommunications network 100 comprises or is able to access the reachability identification backend entity 450 and prior to or during the first step, the reachability identifier information 251 is generated or defined by the reachability identification backend entity 450.

According to a still further variant of the present invention, especially the variant shown in Figure 2, it is preferred that - prior to the second step and as part of the registration of the reachability identifier information 251 with the reachability identification manager 21 - the validity of the reachability identifier information 251 is verified by the reachability identification manager 21, and - in case of this verification being successfully performed - confirmed to the software client application 25, the verification being especially performed by the reachability identification manager 21 by means of an exchange of messages with the reachability identification backend entity 450, especially a verification request message towards the reachability identification backend entity 450 and a verification confirmation message from the reachability identification backend entity 450.

As a very first step (processing step 0, not represented by a reference sign in Figure 2), the reachability identification backend entity 450 assigns the reachability identifier information 251 to the service (or to the software client application 25 or to the combination of the application network backend 250 and the software client application 25). This assignment can happen via different ways, such as, a web portal, a customer service, a specific protocol. When the software client application 25 within the client computing device 20 registers its reachability identifier information 251 (i.e. an instance or a piece of reachability identifier information 251 transmitted to the client computing device 20, especially together with the software instructions of the software client application 25, downloaded to the client computing device 20) towards the reachability identification manager 21 (processing step 1a, represented by reference sign "1a" in Figure 2), the reachability identification manager 21 contacts the reachability identification backend 450 to verify whether the reachability identifier information 251 used (processing step 1b, represented by reference sign "1b" in Figure 2) corresponds to a reachability identifier information 251 to be used with the (service in connection to the) requesting software client application 25. The reachability identification manager 450 then executes security procedures to confirm, that the service application is allowed to use the reachability identifier information 251 in question (processing step 1c, represented by reference sign "1c" in Figure 2). Any security algorithm can be used here. According to still a further variant of this embodiment of the invention, it is also possible, that another interaction with the software client application 25 is required, either by using the same messaging service or using another protocol, or by using a further protocol, especially specific for this purpose. However, the credentials for the security procedure are especially per service, i.e. they are able to be integrated within the software client application 25 (or service application), and the user (or the client computing device 20) does not need to be authenticated at this level. It is up to the service (i.e. the software client application 25 or the combination of the software client application 25 and the application network backend 250) to authenticate, whether the user (or client computing device 20) is allowed to use the service and the underlying messaging is assumed to have its own authentication. After successful authentication (of the reachability identifier information 251 by the reachability identification backend entity 450) the reachability identification manager 21 is notified (processing step 1d, represented by reference sign "1d" in Figure 2), and the reachability identification manager 21 is able to notify the software client application 25 about the successful registration (processing step 1d', represented by reference sign "1d" in Figure 2). Especially, the verification of processing steps 1b and 1d can use the same or a different messaging service to carry the security credentials, or an existing protocol like HTTP or a new protocol utilizing the internet access.

As already mentioned, according to a variant of the present invention, it is preferred that the reachability identifier information 251 is assigned per service, i.e. the reachability identifier information 251 is able to be integrated within the software client application 25 (or service application), and the user (or the client computing device 20) does not need to be authenticated. However, this means that a third party could steal the reachability identifier information 251 and send messages to the software client application 25 (even though it is the reachability identification backend entity 450 that assigns the reachability identifier information 251). Hence, according to another variant of the present invention, the reachability identifier information 251 is randomized, rendering this attack more difficult. However, according to still further variants of the present invention, a further level of authentication is able to be implemented, e.g. the transmission of the reachability identifier information 251 in an encrypted manner (that only the reachability identification manager 21 and/or the software client application 25 is able to decrypt).

According to still a further variant of the present invention, it is possible to unregister (especially by the software client application 25 with respect to the reachability identification manager 21) a reachability identifier information 251 (that has been previously registered).

According to still a further variant of the present invention, it is possible (for especially the software client application 25) to register several reachability identifiers towards the reachability identification manager 21 at the same time.

In case that more than one reachability identification backend entities exist within the telecommunications network 100 (or are accessible using the telecommunications network 100), the formats or ranges of the instances or pieces of reachability identifier information of the different reachability identification backend entities need to be different (ensuring that one and the same reachability identifier information 251 is not assigned by two different reachability identification backend entities unless such reachability identifier information 251 does really relate to the same service, i.e. to the same kind of software client application 25), i.e. different reachability identification backend entities can co-exist, as long as the reachability identifiers are unique and no two reachability identification backends would assign the same reachability identifier to services, unless they really are the same service, i.e. the same service application (or software client application 25) can handle the messages from different backends.

The procedure as represented in Figure 3 assumes that the reachability identification manager 21 knows, or has configured/hard-coded the address of the reachability identification backend entity 450. If there are several reachability identification backend entities 450, the software client application 25 needs to include (in the registration in processing step 1a of Figure 3) the address of the reachability identification backend entity 450 to be used, or some other identification based on which this address can be determined, e.g. by means of obtaining the respective address information from a data base.

The two requirements of (1) the reachability identifier information being unique, and (2) the registration needs to contain an identification of the reachability identification backend entity 450, are able to be combined by standardizing the reachability identifier information 251 in a manner, that it also includes the identity of the reachability identification backend entity 450, for instance the address/number of the reachability identification backend in the underlying messaging service is able to be used.

The reachability identification manager 21 in the client computing device 20 typically handles all incoming communication messages 400, 401. One manner to realize this, is to have only one reachability identification manager 21 per messaging service (i.e. the established or common messaging service within the telecommunications network 100) in the client computing device 20. Having several reachability identification managers 21 within the client computing device 20 would also be possible, but it could be challenging to the operating system, as it would need to implement a serial handling of the incoming communication messages 400, 401, such that these communication messages 400, 401 are offered to the plurality of reachability identification managers 21 one after another. A pragmatic approach could be to standardize the API for the reachability identification manager 21 and to allow only one in the client computing device 20.

The method, system, client computing device and telecommunications network according to the present invention can be implemented based on (or using) any existing messaging service as the established or common messaging service within the telecommunications network 100; however, it is preferred to use the short message service, SMS, which offers, at least currently, by far the best reachability (the reachability identifier information being either part of the content of the specific communication message, or the reachability identifier information being a property of the specific communication message); SMS is specified in 3GPP TS 23.040. Alternatively, IP multimedia subsystem based SMS can be used as the established or common messaging service within the telecommunications network 100 (the reachability identifier information being part of the content of the specific communication message); IMS based SMS being specified in 3GPP TS 24.341. An alternative established or common messaging service within the telecommunications network 100 would be RCS to be used as the underlying messaging service. Furthermore, GSMA PRD RCC.07 could be extended to support the transmission of the reachability identifier information 251. Additionally, any other messaging system that offers an API, could also be used. According to still a further alternative embodiment or variant of the present invention, the reachability identification manager 21 can be built using several messaging services; in this case, a priority would be needed to be defined.

According to numerous variants and embodiments of the present invention, it is preferred that the reachability identifier information 251 used is a textual tag that is included in the message body, e.g. at the beginning of the (content of the) message. This allows the present invention to be implemented on top of any underlying messaging service, without any changes to the underlying messaging service itself. For security reasons, the reachability identifier information 251 is able to be randomized and for allowing several reachability identification backend entities 450, the reachability identifier information 251 could be standardized in a format that includes the address (or an identification) of the reachability identification backend entity 450. The syntax of the reachability identifier information 251 could be as follows, where the length X and Y has to be adapted or agreed upon or standardized:

reachability identifier information = [ reachability identification backend entity address (X characters)][service information (Y characters)]

Even though the above implementation of the reachability identifier information 251 - included in the message body, e.g. at the beginning of the (content of the) message - seems to be the most beneficial, another possibility would be to extend the underlying messaging service by adding the reachability identifier as a property of the message. However, extending the SMS protocol defined in 3GPP TS 23.040 is possible according to the present invention (however, being a widely supported legacy protocol, difficult to change).

The method, system, client computing device and telecommunications network according to the present invention is relevant regardless of the device operating system (of the client computing device 20), but the operating system might provide constraints for the implementation: If the operating system offers an API to replace the native messaging inbox, respective to the used messaging service, then the reachability identification manager 21 is able to be implemented as a downloadable application (i.e. a software client application in its own right, but especially different from the ("specific") software client application being designated by reference sign 25 throughout this specification). This is the case, e.g., for the Android operating system. For an operating system that does not allow this, the handling and detection of the reachability identifier information 251 needs to be integrated as part of the native messaging inbox.

The invention enables services a new asynchronous way to send messages from the backend (application network backend 250) to the service application (software client application 25) in an easily implementable way. Apart from the reachability identifier information 251, the service defines the content of the (specific) communication messages 401, and, hence, it is especially possible that a specific semantic is created, providing the possibility to control the application (software client application 25) asynchronously in a new manner. The coverage offered according to the present invention is as good as the coverage of the underlying messaging service, e.g. for SMS the coverage is very good. The invention relies on receiving messages (specific communication messages 400), hence, it is typically either not creating costs at all or only comparatively insignificant costs to the user and it is therefore not likely that users would want to block it.

**Claims**

1. Method for improved communication between a software client application (25) - being loaded to or installed on a client computing device (20) - and an application network backend (250), using a telecommunications network (100), wherein the client computing device (20) receives a plurality of communication messages (400, 401) using an established or common messaging service within the telecommunications network (100) and wherein the software client application (25) and the client computing device (20) are configured such that specific communication messages (401), being sent by the application network backend (250) to the client computing device (20), are selectively provided to the software client application (25) or selectively handled by the software client application (25), whereby a direct but asynchronous communication between the application network backend (250) and the software client application (25) on the client computing device (20) is provided,

   wherein the method comprises the following steps:

   -- in a first step, a reachability identifier information (251) is defined or generated,
   -- in a second step, subsequent to the first step, a specific communication message (401), transmitted by the telecommunications network (100) according to the established or common messaging service and initiated by the application network backend (250), is received by the client computing device (20), the specific communication message (401) comprising the reachability identifier information (251),
   -- in a third step, subsequent to the second step, the reachability identifier information (251) of the specific communication message (401) is detected and the specific communication message (401) selectively provided to the software client application (25) or selectively handled by the software client application (25).

2. Method according to claim 1, wherein the client computing device (20) comprises a reachability identification manager (21), wherein the reachability identification manager (21) reads the plurality of communication messages (400, 401) received by the client computing device (20), and furthermore detects the reachability identifier information (251) of the specific communication message (401) and provides the specific communication message (401) selectively to the software client application (25).

3. Method according to claim 2, wherein, prior to the second step, the software client application (25) registers the reachability identifier information (251) with the reachability identification manager (21).

**4.** Method according to one of the preceding claims, wherein, besides the software client application (25) on the client computing device (20) and the application network backend (250), the telecommunications network (100) comprises or is able to access a reachability identification backend entity (450), wherein prior to or during the first step, the reachability identifier information (251) is generated or defined by the reachability identification backend entity (450).

**5.** Method according to claim 4, wherein - prior to the second step and as part of the registration of the reachability identifier information (251) with the reachability identification manager (21) - the validity of the reachability identifier information (251) is verified by the reachability identification manager (21), and - in case of this verification being successfully performed - confirmed to the software client application (25), the verification being especially performed by the reachability identification manager (21) by an exchange of messages with the reachability identification backend entity (450), especially a verification request message towards the reachability identification backend entity (450) and a verification confirmation message from the reachability identification backend entity (450).

**6.** Method according to one of the preceding claims, wherein the reachability identifier information (251)

-- identifies the software client application (25) and/or the application network backend (250), or
-- corresponds to both a backend address, especially referring to the application network backend (250), and information identifying the software client application (25) and/or the application network backend (250), or
-- corresponds at least to information identifying the client computing device (20) and at least one out of the software client application (25) and the application network backend (250),

wherein the reachability identifier information (251) either comprises the mentioned items in encrypted form or corresponds to the mentioned items in unencrypted form..

**7.** Method according to one of the preceding claims, wherein

-- the specific communication message (401) comprises the reachability identifier information (251) as part of its content, and wherein especially the established or common messaging service within the telecommunications network (100) - used to transmit the specific communication message (401) - corresponds to the short message service SMS or to the IP multimedia subsystem based SMS, or wherein
-- the reachability identifier information (251) is a property of the specific communication message (401), especially part of the header or part of an element of the header of the specific communication message (401), wherein especially the established or common messaging service within the telecommunications network (100) - used to transmit the specific communication message (401) - corresponds to the short message service SMS.

**8.** Client computing device (20) for improved communication between a software client application (25) - being loaded to or installed on the client computing device (20) - and an application network backend (250), using a telecommunications network (100),
wherein the client computing device (20) receives a plurality of communication messages (400, 401) using an established or common messaging service within the telecommunications network (100) and wherein the software client application (25) and the client computing device (20) are configured such that specific communication messages (401), being sent by the application network backend (250) to the client computing device (20), are selectively provided to the software client application (25) or selectively handled by the software client application (25), whereby a direct but asynchronous communication between the application network backend (250) and the software client application (25) on the client computing device (20) is provided,
wherein the client computing device (20) is configured such that:

-- a reachability identifier information (251) is defined or generated,
-- a specific communication message (401), transmitted by the telecommunications network (100) according to the established or common messaging service and initiated by the application network backend (250), is received by the client computing device (20), the specific communication message (401) comprising the reachability identifier information (251),
-- the reachability identifier information (251) of the specific communication message (401) is detected and the specific communication message (401) selectively provided to the software client application (25) or selectively handled by the software client application (25).

**9.** System for improved communication between a software client application (25) - being loaded to or installed on a client computing device (20) - and an application network backend (250), using a telecommunications network (100), the system comprising the telecommunications network (100), the application network backend (250), and the client computing device (20) with the software client application (25),

wherein the client computing device (20) receives a plurality of communication messages (400, 401) using an established or common messaging service within the telecommunications network (100) and wherein the software client application (25) and the client computing device (20) are configured such that specific communication messages (401), being sent by the application network backend (250) to the client computing device (20), are selectively provided to the software client application (25) or selectively handled by the software client application (25), whereby a direct but asynchronous communication between the application network backend (250) and the software client application (25) on the client computing device (20) is provided,

wherein the system is configured such that:

-- a reachability identifier information (251) is defined or generated,

-- a specific communication message (401), transmitted by the telecommunications network (100) according to the established or common messaging service and initiated by the application network backend (250), is received by the client computing device (20), the specific communication message (401) comprising the reachability identifier information (251),

-- the reachability identifier information (251) of the specific communication message (401) is detected and the specific communication message (401) selectively provided to the software client application (25) or selectively handled by the software client application (25).

10. Client computing device (20) according to claim 8 or system according to 10, wherein the client computing device (20) comprises a reachability identification manager (21), wherein the reachability identification manager (21) reads the plurality of communication messages (400, 401) received by the client computing device (20), and furthermore detects the reachability identifier information (251) of the specific communication message (401) and provides the specific communication message (401) selectively to the software client application (25), wherein especially the software client application (25) registers the reachability identifier information (251) with the reachability identification manager (21).

11. System according to 9, wherein, besides the software client application (25) on the client computing device (20) and the application network backend (250), the telecommunications network (100) comprises or is able to access a reachability identification backend entity (450), wherein the reachability identifier information (251) is generated or defined by the reachability identification backend entity (450).

12. Program comprising a computer readable program code which, when executed on a computer or on a client computing device (20) or on a network node of a telecommunications network (100) or on a reachability identification backend entity (450), or in part on the client computing device (20) and/or in part on the network node of the telecommunications network (100) and/or in part on the reachability identification backend entity (450), causes the computer or the client computing device (20) or the network node of the telecommunications network (100) or the reachability identification backend entity (450) to perform a method according to one of claims 1 to 7.

13. Computer-readable medium comprising instructions which when executed on a computer or on a client computing device (20) or on a network node of a telecommunications network (100) or on a reachability identification backend entity (450), or in part on the client computing device (20) and/or in part on the network node of the telecommunications network (100) and/or in part on the reachability identification backend entity (450), causes the computer or the client computing device (20) or the network node of the telecommunications network (100) or the reachability identification backend entity (450) to perform a method according to one of claims 1 to 7.

**Patentansprüche**

1. Verfahren zur verbesserten Kommunikation zwischen einer Software-Client-Anwendung (25) - die auf einer Client-Rechenvorrichtung (20) geladen oder installiert ist - und einem Anwendungsnetz-Backend (250) unter Verwendung eines Telekommunikationsnetzes (100),

wobei die Client-Rechenvorrichtung (20) mehrere Kommunikationsnachrichten (400, 401) unter Verwendung eines etablierten oder gemeinsamen Nachrichtenübermittlungsdienstes innerhalb des Telekommunikationsnetzes (100) empfängt und wobei die Software-Client-Anwendung (25) und die Client-Rechenvorrichtung (20) derart eingerichtet sind, dass spezifische Kommunikationsnachrichten (401), die durch das Anwendungsnetz-Backend (250) an die Client-Rechenvorrichtung (20) gesendet werden, der Software-Client-Anwendung (25) selektiv bereitgestellt oder

EP 3 591 928 B1

durch die Software-Client-Anwendung (25) selektiv verarbeitet werden, wodurch zwischen dem Anwendungsnetz-Backend (250) und der Software-Client-Anwendung (25) auf der Client-Rechenvorrichtung (20) eine direkte, jedoch asynchrone Kommunikation bereitgestellt wird, wobei das Verfahren die folgenden Schritte umfasst:

- in einem ersten Schritt wird eine Erreichbarkeit-Identifizierungsinformation (251) definiert oder erzeugt,
- in einem zweiten Schritt, der auf den ersten Schritt folgt, wird eine spezifische Kommunikationsnachricht (401), die durch das Telekommunikationsnetz (100) gemäß dem etablierten oder gemeinsamen Nachrichtenübermittlungsdienst gesendet und durch das Anwendungsnetz-Backend (250) initiiert wird, durch die Client-Rechenvorrichtung (20) empfangen, wobei die spezifische Kommunikationsnachricht (401) die Erreichbarkeit-Identifizierungsinformation (251) umfasst,
- in einem dritten Schritt, der auf den zweiten Schritt folgt, wird die Erreichbarkeit-Identifizierungsinformation (251) der spezifischen Kommunikationsnachricht (401) erfasst und die spezifische Kommunikationsnachricht (401) wird selektiv der Software-Client-Anwendung (25) bereitgestellt oder selektiv durch die Software-Client-Anwendung (25) verarbeitet.

2. Verfahren nach Anspruch 1, wobei die Client-Rechenvorrichtung (20) einen Erreichbarkeit-Identifizierungsmanager (21) umfasst, wobei der Erreichbarkeit-Identifizierungsmanager (21) die mehreren Kommunikationsnachrichten (400, 401) liest, die durch die Client-Rechenvorrichtung (20) empfangen werden, und ferner die Erreichbarkeit-Identifizierungsinformation (251) der spezifischen Kommunikationsnachricht (401) erfasst und die spezifische Kommunikationsnachricht (401) selektiv der Software-Client-Anwendung (25) bereitstellt.

3. Verfahren nach Anspruch 2, wobei die Software-Client-Anwendung (25), vor dem zweiten Schritt, die Erreichbarkeit-Identifizierungsinformation (251) in dem Erreichbarkeit-Identifizierungsmanager (21) registriert.

4. Verfahren nach einem der vorhergehenden Ansprüche, wobei das Telekommunikationsnetz (100), neben der Software-Client-Anwendung (25) auf der Client-Rechenvorrichtung (20) und dem Anwendungsnetz-Backend (250), eine Erreichbarkeit-Identifizierungs-Backend-Einheit (450) umfasst oder in der Lage ist, darauf zuzugreifen, wobei die Erreichbarkeit-Identifizierungsinformation (251) durch die Erreichbarkeit-Identifizierungs-Backend-Einheit (450) vor oder während des ersten Schritts erzeugt oder definiert wird.

5. Verfahren nach Anspruch 4, wobei die Gültigkeit der Erreichbarkeit-Identifizierungsinformation (251) - vor dem zweiten Schritt und als Teil der Registrierung der Erreichbarkeit-Identifizierungsinformation (251) in dem Erreichbarkeit-Identifizierungsmanager (21) - durch den Erreichbarkeit-Identifizierungsmanager (21) überprüft und - für den Fall, dass diese Überprüfung erfolgreich durchgeführt wird - der Software-Client-Anwendung (25) bestätigt wird, wobei die Überprüfung durch den Erreichbarkeit-Identifizierungsmanager (21) insbesondere durch einen Austausch von Nachrichten mit der Erreichbarkeit-Identifizierungs-Backend-Einheit (450), insbesondere einer Überprüfungsanforderungsnachricht an die Erreichbarkeit-Identifizierungs-Backend-Einheit (450) sowie eine Überprüfungsbestätigungsnachricht von der Erreichbarkeit-Identifizierungs-Backend-Einheit (450), durchgeführt wird.

6. Verfahren nach einem der vorhergehenden Ansprüche, wobei die Erreichbarkeit-Identifizierungsinformation (251)

- die Software-Client-Anwendung (25) und/oder das Anwendungsnetz-Backend (250) identifiziert oder
- sowohl einer Backend-Adresse, insbesondere in Bezug auf das Anwendungsnetz-Backend (250), als auch einer Information, welche die Software-Client-Anwendung (25) und/oder das Anwendungsnetz-Backend (250) identifiziert, entspricht oder
- mindestens einer Information, welche die Client-Rechenvorrichtung (20) und die Software-Client-Anwendung (25) und/oder das Anwendungsnetz-Backend (250) identifiziert, entspricht,

wobei die Erreichbarkeit-Identifizierungsinformation (251) entweder die erwähnten Posten in verschlüsselter Form umfasst oder den erwähnten Posten in unverschlüsselter Form entspricht.

7. Verfahren nach einem der vorhergehenden Ansprüche, wobei

- die spezifische Kommunikationsnachricht (401) die Erreichbarkeit-Identifizierungsinformation (251) als Teil ihres Inhalts umfasst und wobei insbesondere der etablierte oder gemeinsame Nachrichtenübermittlungsdienst innerhalb des Telekommunikationsnetzes (100) - der verwendet wird, um die spezifische Kommunikationsnachricht (401) zu senden

- dem Kurznachrichtendienst SMS oder dem auf dem IP Multimedia Subsystem basierenden SMS entspricht, oder wobei

- die Erreichbarkeit-Identifizierungsinformation (251) eine Eigenschaft der spezifischen Kommunikationsnachricht (401), insbesondere Teil der Kopfzeile oder Teil eines Elements der Kopfzeile der spezifischen Kommunikationsnachricht (401), ist, wobei insbesondere der etablierte oder gemeinsame Nachrichtenübermittlungsdienst innerhalb des Telekommunikationsnetzes (100) - der verwendet wird, um die spezifische Kommunikationsnachricht (401) zu senden

- dem Kurznachrichtendienst SMS entspricht.

8. Client-Rechenvorrichtung (20) zur verbesserten Kommunikation zwischen einer Software-Client-Anwendung (25) - die auf der Client-Rechenvorrichtung (20) geladen oder installiert ist - und einem Anwendungsnetz-Backend (250) unter Verwendung eines Telekommunikationsnetzes (100), wobei die Client-Rechenvorrichtung (20) mehrere Kommunikationsnachrichten (400, 401) unter Verwendung eines etablierten oder gemeinsamen Nachrichtenübermittlungsdienstes innerhalb des Telekommunikationsnetzes (100) empfängt und wobei die Software-Client-Anwendung (25) und die Client-Rechenvorrichtung (20) derart eingerichtet sind, dass spezifische Kommunikationsnachrichten (401), die durch das Anwendungsnetz-Backend (250) an die Client-Rechenvorrichtung (20) gesendet werden, der Software-Client-Anwendung (25) selektiv bereitgestellt oder durch die Software-Client-Anwendung (25) selektiv verarbeitet werden, wodurch zwischen dem Anwendungsnetz-Backend (250) und der Software-Client-Anwendung (25) auf der Client-Rechenvorrichtung (20) eine direkte, jedoch asynchrone Kommunikation bereitgestellt wird, wobei die Client-Rechenvorrichtung (20) derart eingerichtet ist, dass:

- eine Erreichbarkeit-Identifizierungsinformation (251) definiert oder erzeugt wird,
- eine spezifische Kommunikationsnachricht (401), die durch das Telekommunikationsnetz (100) gemäß dem etablierten oder gemeinsamen Nachrichtenübermittlungsdienst gesendet und durch das Anwendungsnetz-Backend (250) initiiert wird, durch die Client-Rechenvorrichtung (20) empfangen wird, wobei die spezifische Kommunikationsnachricht (401) die Erreichbarkeit-Identifizierungsinformation (251) umfasst,
- die Erreichbarkeit-Identifizierungsinformation (251) der spezifischen Kommunikationsnachricht (401) erfasst wird und die spezifische Kommunikationsnachricht (401) selektiv der Software-Client-Anwendung (25) bereitgestellt oder selektiv durch die Software-Client-Anwendung (25) verarbeitet wird.

9. System zur verbesserten Kommunikation zwischen einer Software-Client-Anwendung (25) - die auf einer Client-Rechenvorrichtung (20) geladen oder installiert ist - und einem Anwendungsnetz-Backend (250) unter Verwendung eines Telekommunikationsnetzes (100), wobei das System das Telekommunikationsnetz (100), das Anwendungsnetz-Backend (250) und die Client-Rechenvorrichtung (20) mit der Software-Client-Anwendung (25) umfasst, wobei die Client-Rechenvorrichtung (20) mehrere Kommunikationsnachrichten (400, 401) unter Verwendung eines etablierten oder gemeinsamen Nachrichtenübermittlungsdienstes innerhalb des Telekommunikationsnetzes (100) empfängt und wobei die Software-Client-Anwendung (25) und die Client-Rechenvorrichtung (20) derart eingerichtet sind, dass spezifische Kommunikationsnachrichten (401), die durch das Anwendungsnetz-Backend (250) an die Client-Rechenvorrichtung (20) gesendet werden, der Software-Client-Anwendung (25) selektiv bereitgestellt oder durch die Software-Client-Anwendung (25) selektiv verarbeitet werden, wodurch zwischen dem Anwendungsnetz-Backend (250) und der Software-Client-Anwendung (25) auf der Client-Rechenvorrichtung (20) eine direkte, jedoch asynchrone Kommunikation bereitgestellt wird, wobei das System derart eingerichtet ist, dass:

- eine Erreichbarkeit-Identifizierungsinformation (251) definiert oder erzeugt wird,
- eine spezifische Kommunikationsnachricht (401), die durch das Telekommunikationsnetz (100) gemäß dem etablierten oder gemeinsamen Nachrichtenübermittlungsdienst gesendet und durch das Anwendungsnetz-Backend (250) initiiert wird, durch die Client-Rechenvorrichtung (20) empfangen wird, wobei die spezifische Kommunikationsnachricht (401) die Erreichbarkeit-Identifizierungsinformation (251) umfasst,
- die Erreichbarkeit-Identifizierungsinformation (251) der spezifischen Kommunikationsnachricht (401) erfasst wird und die spezifische Kommunikationsnachricht (401) selektiv der Software-Client-Anwendung (25) bereitgestellt oder selektiv durch die Software-Client-Anwendung (25) verarbeitet wird.

10. Client-Rechenvorrichtung (20) nach Anspruch 8 oder System nach Anspruch 10, wobei die Client-Rechenvorrichtung (20) einen Erreichbarkeit-Identifizierungsmanager (21) umfasst, wobei der Erreichbarkeit-Identifizierungsmanager (21) die mehreren Kommunikationsnachrichten (400, 401) liest, die durch die Client-Rechenvorrichtung (20) empfangen werden, und ferner die Erreichbarkeit-Identifizierungsinformation (251) der spezifischen Kommunikationsnachricht (401) erfasst und die spezifische Kommunikationsnachricht (401) selektiv der Software-Client-Anwendung (25) bereitstellt, wobei insbesondere die Software-Client-Anwendung (25) die Erreichbarkeit-Identifizierungsinformation (251) in dem Erreichbarkeit-Identifizierungsmanager (21) registriert.

11. System nach Anspruch 9, wobei das Telekommunikationsnetz (100), neben der Software-Client-Anwendung (25) auf der Client-Rechenvorrichtung (20) und dem Anwendungsnetz-Backend (250), eine Erreichbarkeit-Identifizierungs-Backend-Einheit (450) umfasst oder in der Lage ist, darauf zuzugreifen, wobei die Erreichbarkeit-Identifizierungsinformation (251) durch die Erreichbarkeit-Identifizierungs-Backend-Einheit (450) erzeugt oder definiert wird.

12. Programm, umfassend einen computerlesbaren Programmcode, welcher, wenn er auf einem Computer oder auf einer Client-Rechenvorrichtung (20) oder auf einem Netzknoten eines Telekommunikationsnetzes (100) oder auf einer Erreichbarkeit-Identifizierungs-Backend-Einheit (450) oder teilweise auf der Client-Rechenvorrichtung (20) und/oder teilweise auf dem Netzknoten des Telekommunikationsnetzes (100) und/oder teilweise auf der Erreichbarkeit-Identifizierungs-Backend-Einheit (450) ausgeführt wird, den Computer oder die Client-Rechenvorrichtung (20) oder den Netzknoten des Telekommunikationsnetzes (100) oder die Erreichbarkeit-Identifizierungs-Backend-Einheit (450) dazu veranlasst, ein Verfahren nach einem der Ansprüche 1 bis 7 durchzuführen.

13. Computerlesbares Medium, das Anweisungen umfasst, die, wenn sie auf einem Computer oder auf einer Client-Rechenvorrichtung (20) oder auf einem Netzknoten eines Telekommunikationsnetzes (100) oder auf einer Erreichbarkeit-Identifizierungs-Backend-Einheit (450) oder teilweise auf der Client-Rechenvorrichtung (20) und/oder teilweise auf dem Netzknoten des Telekommunikationsnetzes (100) und/oder teilweise auf der Erreichbarkeit-Identifizierungs-Backend-Einheit (450) ausgeführt werden, den Computer oder die Client-Rechenvorrichtung (20) oder den Netzknoten des Telekommunikationsnetzes (100) oder die Erreichbarkeit-Identifizierungs-Backend-Einheit (450) dazu veranlassen, ein Verfahren nach einem der Ansprüche 1 bis 7 durchzuführen.

## Revendications

1. Procédé pour une communication améliorée entre une application client logicielle (25) - chargée ou installée sur un dispositif informatique client (20) - et un dorsal de réseau d'applications (250), en utilisant un réseau de télécommunications (100),
dans lequel le dispositif informatique client (20) reçoit une pluralité de messages de communication (400, 401) en utilisant un service de messagerie établi ou commun au sein du réseau de télécommunications (100) et dans lequel l'application client logicielle (25) et le dispositif informatique client (20) sont configurés de telle sorte que des messages de communication spécifiques (401), envoyés par le dorsal de réseau d'applications (250) au dispositif informatique client (20), sont fournis sélectivement à l'application client logicielle (25) ou traités sélectivement par l'application client logicielle (25), une communication directe mais asynchrone entre le dorsal de réseau d'applications (250) et l'application client logicielle (25) sur le dispositif informatique client (20) étant ainsi fournie,
ledit procédé comprenant les étapes suivantes :

   - dans une première étape, des informations d'identifiant d'accessibilité (251) sont définies ou générées,
   - dans une deuxième étape, consécutive à la première étape, un message de communication spécifique (401), transmis par le réseau de télécommunications (100) selon le service de messagerie établi ou commun et initié par le dorsal de réseau d'applications (250), est reçu par le dispositif informatique client (20), le message de communication spécifique (401) comprenant les informations d'identifiant d'accessibilité (251),
   - dans une troisième étape, consécutive à la deuxième étape, les informations d'identifiant d'accessibilité (251) du message de communication spécifique (401) sont détectées et le message de communication spécifique (401) est fourni sélectivement à l'application client logicielle (25) ou traité sélectivement par l'application client logicielle (25).

2. Procédé selon la revendication 1, dans lequel le dispositif informatique client (20) comprend un gestionnaire d'identification d'accessibilité (21), dans lequel le gestionnaire d'identification d'accessibilité (21) lit la pluralité de messages de communication (400, 401) reçus par le dispositif informatique client (20), et détecte en outre les informations d'identifiant d'accessibilité (251) du message de communication spécifique (401) et fournit le message de communication spécifique (401) sélectivement à l'application client logicielle (25).

3. Procédé selon la revendication 2, dans lequel, avant la deuxième étape, l'application client logicielle (25) enregistre les informations d'identifiant d'accessibilité (251) auprès du gestionnaire d'identification d'accessibilité (21) .

**4.** Procédé selon l'une des revendications précédentes, dans lequel, outre l'application client logicielle (25) sur le dispositif informatique client (20) et le dorsal de réseau d'applications (250), le réseau de télécommunications (100) comprend ou peut accéder à une entité dorsale d'identification d'accessibilité (450), dans lequel avant ou pendant la première étape, les informations d'identifiant d'accessibilité (251) sont générées ou définies par l'entité dorsale d'identification d'accessibilité (450).

**5.** Procédé selon la revendication 4, dans lequel - avant la deuxième étape et dans le cadre de l'enregistrement des informations d'identifiant d'accessibilité (251) auprès du gestionnaire d'identification d'accessibilité (21) - la validité des informations d'identifiant d'accessibilité (251) est vérifiée par le gestionnaire d'identification d'accessibilité (21), et - dans le cas où cette vérification est effectuée avec succès - confirmée à l'application client logicielle (25), la vérification étant en particulier effectuée par le gestionnaire d'identification d'accessibilité (21) par un échange de messages avec l'entité dorsale d'identification d'accessibilité (450), en particulier un message de demande de vérification vers l'entité dorsale d'identification d'accessibilité (450) et un message de confirmation de vérification de l'entité dorsale d'identification d'accessibilité (450).

**6.** Procédé selon l'une des revendications précédentes, dans lequel les informations d'identifiant d'accessibilité (251)

- identifient l'application client logicielle (25) et/ou le dorsal de réseau d'applications (250), ou
- correspondent à la fois à une adresse de dorsal, en particulier se référant au dorsal de réseau d'applications (250), et à des informations identifiant l'application client logicielle (25) et/ou le dorsal de réseau d'applications (250), ou
- correspondent au moins à des informations identifiant le dispositif informatique client (20) et au moins un élément parmi l'application client logicielle (25) et le dorsal de réseau d'applications (250),

dans lequel les informations d'identifiant d'accessibilité (251) comprennent les items mentionnés sous forme cryptée ou correspondent aux items mentionnés sous forme non cryptée.

**7.** Procédé selon l'une des revendications précédentes, dans lequel

- le message de communication spécifique (401) comprend les informations d'identifiant d'accessibilité (251) en tant que partie de son contenu, et dans lequel en particulier le service de messagerie établi ou commun au sein du réseau de télécommunications (100) - utilisé pour transmettre le message de communication spécifique (401)

    - correspond au service de messages courts SMS ou au SMS basé sur le sous-système multimédia IP, ou dans lequel

- les informations d'identifiant d'accessibilité (251) sont une propriété du message de communication spécifique (401), en particulier une partie de l'en-tête ou une partie d'un élément de l'en-tête du message de communication spécifique (401), dans lequel en particulier le service de messagerie établi ou commun au sein du réseau de télécommunications (100) - utilisé pour transmettre le message de communication spécifique (401)

    - correspond au service de messages courts SMS.

**8.** Dispositif informatique client (20) pour une communication améliorée entre une application client logicielle (25) - chargée ou installée sur le dispositif informatique client (20) - et un dorsal de réseau d'applications (250), en utilisant un réseau de télécommunications (100),
dans lequel le dispositif informatique client (20) reçoit une pluralité de messages de communication (400, 401) en utilisant un service de messagerie établi ou commun au sein du réseau de télécommunications (100) et dans lequel l'application client logicielle (25) et le dispositif informatique client (20) sont configurés de telle sorte que des messages de communication spécifiques (401), envoyés par le dorsal de réseau d'applications (250) au dispositif informatique client (20), sont fournis sélectivement à l'application client logicielle (25) ou traités sélectivement par l'application client logicielle (25), une communication directe mais asynchrone entre le dorsal de réseau d'applications (250) et l'application client logicielle (25) sur le dispositif informatique client (20) étant ainsi fournie,
ledit dispositif informatique client (20) étant configuré de telle sorte que :

- des informations d'identifiant d'accessibilité (251) sont définies ou générées,
- un message de communication spécifique (401), transmis par le réseau de télécommunications (100) selon le service de messagerie établi ou commun et initié par le dorsal de réseau d'applications (250), est reçu par le dispositif informatique client (20), le message de communication spécifique (401) comprenant les informations d'identifiant d'accessibilité (251),

- les informations d'identifiant d'accessibilité (251) du message de communication spécifique (401) sont détectées et le message de communication spécifique (401) est fourni sélectivement à l'application client logicielle (25) ou traité sélectivement par l'application client logicielle (25).

9. Système pour une communication améliorée entre une application client logicielle (25) - chargée ou installée sur un dispositif informatique client (20) - et un dorsal de réseau d'applications (250), en utilisant un réseau de télécommunications (100), le système comprenant le réseau de télécommunications (100), le dorsal de réseau d'applications (250) et le dispositif informatique client (20) avec l'application client logicielle (25),

dans lequel le dispositif informatique client (20) reçoit une pluralité de messages de communication (400, 401) en utilisant un service de messagerie établi ou commun au sein du réseau de télécommunications (100) et dans lequel l'application client logicielle (25) et le dispositif informatique client (20) sont configurés de telle sorte que des messages de communication spécifiques (401), envoyés par le dorsal de réseau d'applications (250) au dispositif informatique client (20), sont fournis sélectivement à l'application client logicielle (25) ou traités sélectivement par l'application client logicielle (25), une communication directe mais asynchrone entre le dorsal de réseau d'applications (250) et l'application client logicielle (25) sur le dispositif informatique client (20) étant ainsi fournie,

ledit système étant configuré de telle sorte que :

- des informations d'identifiant d'accessibilité (251) sont définies ou générées,
- un message de communication spécifique (401), transmis par le réseau de télécommunications (100) selon le service de messagerie établi ou commun et initié par le dorsal de réseau d'applications (250), est reçu par le dispositif informatique client (20), le message de communication spécifique (401) comprenant les informations d'identifiant d'accessibilité (251),
- les informations d'identifiant d'accessibilité (251) du message de communication spécifique (401) sont détectées et le message de communication spécifique (401) est fourni sélectivement à l'application client logicielle (25) ou traité sélectivement par l'application client logicielle (25).

10. Dispositif informatique client (20) selon la revendication 8 ou système selon la revendication 10, ledit le dispositif informatique client (20) comprenant un gestionnaire d'identification d'accessibilité (21), dans lequel le gestionnaire d'identification d'accessibilité (21) lit la pluralité de messages de communication (400, 401) reçus par le dispositif informatique client (20), et détecte en outre les informations d'identifiant d'accessibilité (251) du message de communication spécifique (401) et fournit le message de communication spécifique (401) sélectivement à l'application client logicielle (25), dans lequel en particulier l'application client logicielle (25) enregistre les informations d'identifiant d'accessibilité (251) auprès du gestionnaire d'identification d'accessibilité (21).

11. Système selon la revendication 9, dans lequel, outre l'application client logicielle (25) sur le dispositif informatique client (20) et le dorsal de réseau d'applications (250), le réseau de télécommunications (100) comprend ou peut accéder à une entité dorsale d'identification d'accessibilité (450), dans lequel les informations d'identifiant d'accessibilité (251) sont générées ou définies par l'entité dorsale d'identification d'accessibilité (450).

12. Programme comprenant un code de programme lisible par ordinateur qui, lorsqu'il est exécuté sur un ordinateur ou sur un dispositif informatique client (20) ou sur un nœud de réseau d'un réseau de télécommunications (100) ou sur une entité dorsale d'identification d'accessibilité (450), ou en partie sur le dispositif informatique client (20) et/ou en partie sur le nœud de réseau du réseau de télécommunications (100) et/ou en partie sur l'entité dorsale d'identification d'accessibilité (450), amène l'ordinateur ou le dispositif informatique client (20) ou le nœud de réseau du réseau de télécommunications (100) ou l'entité dorsale d'identification d'accessibilité (450) à mettre en œuvre un procédé selon l'une des revendications 1 à 7.

13. Support lisible par ordinateur comprenant des instructions qui, lorsqu'elles sont exécutées sur un ordinateur ou sur un dispositif informatique client (20) ou sur un nœud de réseau d'un réseau de télécommunications (100) ou sur une entité dorsale d'identification d'accessibilité (450), ou en partie sur le dispositif informatique client (20) et/ou en partie sur le nœud de réseau du réseau de télécommunications (100) et/ou en partie sur l'entité dorsale d'identification d'accessibilité (450), amène l'ordinateur ou le dispositif informatique client (20) ou le nœud de réseau du réseau de télécommunications (100) ou l'entité dorsale d'identification d'accessibilité (450) à mettre en œuvre un procédé selon l'une des revendications 1 à 7.

Fig. 1

Fig. 2

**EP 3 591 928 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110231562 A1